# FASCICULE DE BREVET EUROPEEN

(11) **EP 3 311 717 B1**
(45) Date de publication et mention de la délivrance du brevet: **16.08.2023**
(21) Numéro de dépôt: 17197776.2
(22) Date de dépôt: 23.10.2017
(51) Int. Cl.: A47J 43/044

(54) **APPAREIL ELECTROMENAGER DE PREPARATION CULINAIRE COMPORTANT UN COUVERCLE INTERMEDIAIRE**
ELEKTROHAUSHALTSGERÄT ZUR ESSENSZUBEREITUNG, DAS EINEN ZWISCHENDECKEL UMFASST
ELECTRICAL KITCHEN APPLIANCE COMPRISING AN INTERMEDIATE COVER

(30) Priorité: 24.10.2016 FR 1660295
(43) Date de publication de la demande: 25.04.2018
(73) Titulaire: SEB S.A., 69130 Ecully (FR)
(72) Inventeur: CHARLES, Patrick, 65290 LOUEY (FR); SUBERBIE, Nicolas, 74330 POISY (FR); BEAUDET, Jean-Yves, 53110 SAINT-JULIEN-DU-TERROUX (FR)
(74) Mandataire: SEB Développement

(56) Documents cités:
- WO-A1-2006/092477
- WO-A1-2014/053963
- WO-A1-2014/055759
- DE-A1- 10 244 717
- FR-A1- 2 927 521

## Description

La présente invention concerne le domaine technique des appareils électroménagers de préparation culinaire comportant un récipient de travail, un accessoire de travail rotatif agencé dans le récipient de travail, et un boîtier motorisé supérieur disposé au dessus du récipient de travail pour entraîner en rotation l'accessoire de travail rotatif selon un axe de rotation, et un couvercle intermédiaire agencé entre le récipient de travail et le boîtier motorisé supérieur. Il est connu du document EP2384676 un appareil du type précité dans lequel le boîtier motorisé supérieur est verrouillé par baïonnette avec le récipient de travail. Toutefois dans ce document le couvercle intermédiaire est simplement posé dans le récipient de travail. Le document WO2014055759 divulge un appareil de cuisson avec un boîtier supérieur et un couvercle intermédiaire.

Un appareil selon le préambule de la revendication 1 est connu du document FR2927521.

Un objet de la présente invention est de proposer un appareil du type précité dans lequel l'ergonomie d'utilisation est améliorée.

Un autre objet de la présente invention est de proposer un appareil du type précité dont la construction reste simple.

Un objet de la présente invention est de proposer un appareil du type précité dans lequel la sécurité est améliorée.

Ces objets sont atteints avec un appareil électroménager de préparation culinaire comportant un récipient de travail, un accessoire de travail rotatif disposé dans le récipient de travail, un boîtier motorisé supérieur disposé sur le récipient de travail pour entraîner en rotation l'accessoire de travail rotatif selon un axe de rotation, un couvercle intermédiaire porté par le récipient de travail, le couvercle intermédiaire étant bloqué en rotation par rapport au récipient de travail, le boîtier motorisé supérieur étant disposé sur le couvercle intermédiaire, le boîtier motorisé supérieur comportant au moins un organe d'accrochage, le couvercle intermédiaire comportant au moins un organe de retenue, le ou au moins l'un des organes d'accrochage, respectivement le ou au moins l'un des organes de retenue, étant monté mobile dans un plan principalement perpendiculaire à l'axe de rotation contre un élément de rappel élastique, le ou au moins l'un des organes d'accrochage, respectivement le ou au moins l'un des organes de retenue, présentant un chanfrein inférieur, respectivement un chanfrein supérieur, de sorte que le couvercle intermédiaire, respectivement le boîtier motorisé supérieur, repousse le chanfrein inférieur, respectivement le chanfrein supérieur, contre l'élément de rappel élastique lorsque le boîtier motorisé supérieur est mis en place sur le couvercle intermédiaire, et que l'organe d'accrochage vient en prise avec l'organe de retenue lorsque le boîtier motorisé supérieur est mis en place sur le couvercle intermédiaire selon une direction principalement parallèle à l'axe de rotation, pour soulever le couvercle intermédiaire avec le boîtier motorisé supérieur lorsque le boîtier motorisé supérieur est retiré du récipient de travail, du fait que le boîtier motorisé supérieur est verrouillé avec le récipient de travail par rotation autour de l'axe de rotation, l'organe d'accrochage étant en prise avec l'organe de retenue lorsque le boîtier motorisé supérieur est déverrouillé, que le couvercle intermédiaire comporte au moins une protubérance supérieure, que le boîtier motorisé supérieur (4) comporte au moins une protubérance inférieure, et que le boîtier motorisé supérieur peut être tourné sur le couvercle intermédiaire pour occuper une position de désaccouplement dans laquelle un contact entre la ou au moins l'une des protubérances supérieures et la ou au moins l'une des protubérances inférieures soulève le boîtier motorisé supérieur par rapport au couvercle intermédiaire et dégage le ou les organe(s) d'accrochage du ou des organe(s) de retenue.

Ces dispositions permettent de faciliter l'utilisation de l'appareil. L'utilisateur peut mettre en place successivement le couvercle intermédiaire et le boîtier motorisé supérieur, mais n'a pas besoin de retirer successivement le boîtier motorisé supérieur puis le couvercle intermédiaire pour pouvoir ajouter un ingrédient. Ces dispositions permettent d'obtenir un point de verrouillage du boîtier motorisé supérieur, qui empêche le retrait du boîtier motorisé supérieur du récipient de travail par un simple soulèvement. Ces dispositions permettent d'obtenir un appareil présentant une construction simple et robuste. Si désiré l'élément de rappel élastique peut être issu du ou de l'un des organe(s) d'accrochage ou du ou de l'un des organe(s) de retenue. Ces dispositions permettent de faciliter l'accrochage du couvercle intermédiaire au boîtier motorisé supérieur. Ces dispositions permettent de réaliser une position de désaccouplement permettant le retrait successif du boîtier motorisé supérieur puis du couvercle intermédiaire.

Avantageusement alors, le boîtier motorisé supérieur comporte deux organes d'accrochage opposés, le couvercle intermédiaire comporte deux organes de retenue opposés, et les organes d'accrochage viennent en prise avec les organes de retenue lorsque le boîtier motorisé supérieur est mis en place sur le couvercle intermédiaire selon une direction principalement parallèle à l'axe de rotation, pour soulever le couvercle intermédiaire avec le boîtier motorisé supérieur lorsque le boîtier motorisé supérieur est retiré du récipient de travail.

Ces dispositions permettent d'obtenir un meilleur accrochage du couvercle intermédiaire au boîtier motorisé supérieur.

Avantageusement alors, le ou au moins l'un des organes d'accrochage, respectivement le ou au moins l'un des organes de retenue, présente un chanfrein supérieur, respectivement un chanfrein inférieur, venant en prise sous le ou au moins l'un des organes de retenue, respectivement sur le ou au moins l'un des organes d'accrochage, lorsque le boîtier motorisé supérieur est en place sur le couvercle intermédiaire.

Ces dispositions permettent de faciliter le désengagement du couvercle intermédiaire du boîtier motorisé supérieur.

Avantageusement encore, le boîtier motorisé supérieur est verrouillé par baïonnette avec le couvercle intermédiaire et peut occuper par rotation sur le couvercle intermédiaire successivement une position déverrouillée et une position verrouillée.

Cette disposition permet une meilleure solidarisation du boîtier motorisé supérieur, du couvercle intermédiaire et du récipient de travail.

Avantageusement encore, le boîtier motorisé supérieur est verrouillé avec une poignée du récipient de travail par rotation autour de l'axe de rotation.

Cette disposition facilite la réalisation du verrouillage avec le récipient de travail.

Selon un mode de réalisation avantageux, l'appareil comporte une base recevant le récipient de travail, et la base comporte un montant présentant un connecteur électrique de motorisation pour alimenter électriquement le boîtier motorisé supérieur.

Avantageusement alors, le boîtier motorisé supérieur est verrouillé avec le montant par rotation autour de l'axe de rotation.

Cette disposition permet d'obtenir un point de verrouillage du boîtier motorisé supérieur, qui empêche le retrait du boîtier motorisé supérieur du récipient de travail par un simple soulèvement.

Avantageusement alors, le boîtier motorisé supérieur est verrouillé par rotation autour de l'axe de rotation, et le boîtier motorisé supérieur est verrouillé de manière opposée par rapport à l'axe de rotation d'une part avec le montant et d'autre part avec le récipient de travail.

Cette disposition permet d'obtenir un verrouillage efficace avec une réalisation simple.

Avantageusement encore, le boîtier motorisé supérieur comporte un organe de détection repoussé par le couvercle intermédiaire pour autoriser le fonctionnement de l'appareil lorsque le connecteur électrique de motorisation alimente électriquement le boîtier motorisé supérieur.

Cette disposition permet d'obtenir une meilleure sécurité d'utilisation.

Avantageusement alors, l'organe de détection et l'organe d'accrochage appartiennent à une pièce montée mobile contre l'élément de rappel élastique.

Cette disposition permet de simplifier la construction de l'appareil.

Avantageusement alors, le couvercle intermédiaire comporte un chanfrein latéral repoussant l'organe de détection contre l'élément de rappel élastique vers une position repoussée lorsque le boîtier motorisé supérieur est tourné sur le couvercle intermédiaire pour alimenter électriquement le boîtier motorisé supérieur, et ledit organe de détection en position repoussée actionne un interrupteur électrique autorisant le fonctionnement de l'appareil.

Cette disposition permet d'alimenter électriquement le boîtier motorisé supérieur après que le boîtier motorisé supérieur a été tourné par rapport au récipient de travail, pour être verrouillé.

Avantageusement alors, le chanfrein latéral est prolongé par un renfoncement autorisant une détente de l'élément de rappel élastique lorsque le boîtier motorisé supérieur est tourné sur le couvercle intermédiaire de la position déverrouillée vers la position verrouillée.

Cette disposition permet d'indiquer de manière économique que le boîtier motorisé supérieur est correctement verrouillé.

Selon un mode de réalisation avantageux, l'appareil électroménager de préparation culinaire comporte un dispositif de chauffe électrique pour chauffer les aliments contenus dans le récipient de travail.

Avantageusement alors, le dispositif de chauffe électrique est porté par le récipient de travail, et la base comporte un connecteur électrique de chauffe pour alimenter électriquement le dispositif de chauffe électrique lorsque le récipient de travail est disposé sur la base. En alternative, le dispositif de chauffe électrique pourrait notamment être porté par la base.

Avantageusement encore, le récipient de travail présente un fond et comporte un organe de centrage s'élevant à partir du fond, et l'accessoire de travail rotatif est monté sur l'organe de centrage.

Avantageusement encore, le couvercle intermédiaire comporte une bordure extérieure présentant une partie inférieure apparente lorsque le boîtier motorisé supérieur est disposé sur le couvercle intermédiaire.

Cette disposition permet de faciliter le retrait du couvercle intermédiaire, notamment lorsque celui-ci est chaud.

L'invention sera mieux comprise à l'étude d'un exemple de réalisation et d'une variante, pris à titre nullement limitatif, illustrés dans les figures annexées, dans lesquelles :
- la figure 1 est une vue en perspective et en éclaté d'un exemple de réalisation d'un appareil électroménager de préparation culinaire,
- la figure 2 est une vue en coupe verticale de l'appareil électroménager de préparation culinaire illustré sur la figure 1, dans une configuration de rangement,
- la figure 3 est une vue en coupe verticale de l'appareil électroménager de préparation culinaire illustré sur la figure 1, dans une configuration d'utilisation, la base n'étant pas représentée,
- la figure 4 est une vue en élévation de l'appareil électroménager de préparation culinaire illustré sur la figure 1, dans une configuration assemblée,
- les figures 5 et 6 sont deux vues en perspective de côté et de dessus de la base de l'appareil électroménager de préparation culinaire illustré sur la figure 1,
- les figures 7 et 8 sont deux vues en perspective de côté et de dessous du récipient de travail de l'appareil électroménager de préparation culinaire illustré sur la figure 1,
- les figures 9 et 10 sont des vues en perspective de dessus du couvercle intermédiaire de l'appareil électroménager de préparation culinaire illustré sur la figure 1,
- les figures 11 et 12 sont des vues en perspective de dessous et de dessus du boîtier motorisé supérieur de l'appareil électroménager de préparation culinaire illustré sur la figure 1,
- la figure 13 est une vue partielle en perspective illustrant la mise en place par un mouvement axial du boîtier motorisé supérieur de l'appareil électroménager de préparation culinaire illustré sur la figure 1 sur le récipient de travail portant le couvercle intermédiaire,
- la figure 14 est une vue partielle en élévation et en coupe du boîtier motorisé supérieur, du couvercle intermédiaire et du récipient de travail dans la position de la figure 13,
- la figure 15 est une vue partielle en perspective du couvercle intermédiaire illustrant le déplacement d'un organe de retenue du boîtier motorisé supérieur de l'appareil électroménager de préparation culinaire illustré sur la figure 1, pour l'accrochage du boîtier motorisé supérieur,
- la figure 16 est une vue partielle en perspective illustrant le verrouillage du boîtier motorisé supérieur de l'appareil électroménager de préparation culinaire illustré sur la figure 1 sur le récipient de travail portant le couvercle intermédiaire, par un mouvement de rotation dans un plan perpendiculaire à l'axe de rotation,
- la figure 17 est une vue partielle en élévation et en coupe du boîtier motorisé supérieur, du couvercle intermédiaire et du récipient de travail dans la position de la figure 16,
- la figure 18 est une vue partielle en perspective du couvercle intermédiaire illustrant le déplacement d'un organe de retenue du boîtier motorisé supérieur de l'appareil électroménager de préparation culinaire illustré sur la figure 1, pour l'accrochage et le verrouillage du boîtier motorisé supérieur,
- la figure 19 est une variante de réalisation du boîtier motorisé supérieur illustré sur les figures 1, 11 et 12 selon l'invention,
- la figure 20 est une variante de réalisation du couvercle intermédiaire illustré sur les figures 1, 9 et 10 selon l'invention.

L'appareil électroménager de préparation culinaire illustré sur les figures comporte une base 1, un récipient de travail 2, un couvercle intermédiaire 3, un boîtier motorisé supérieur 4, ainsi que des accessoires de préparation 5.

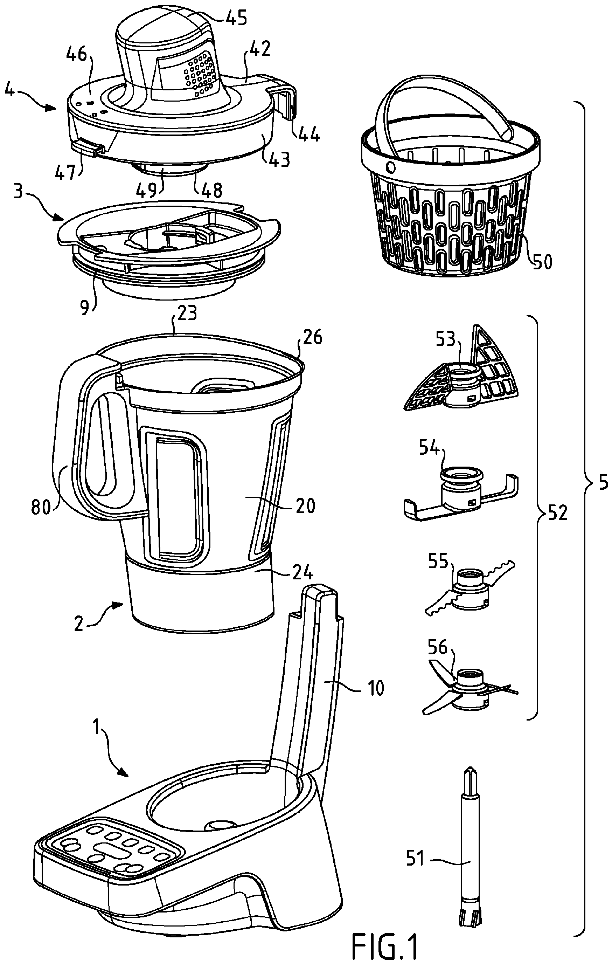

Tel que représenté sur la figure 1, les accessoires de préparation 5 comprennent un panier vapeur 50, un moyeu 51, et des outils de travail rotatifs 52 interchangeables. Les outils de travail rotatifs 52 comprennent un outil émulsionneur 53, un outil de mélange 54, un outil couteau denté 55 et un outil couteau coupant 56.

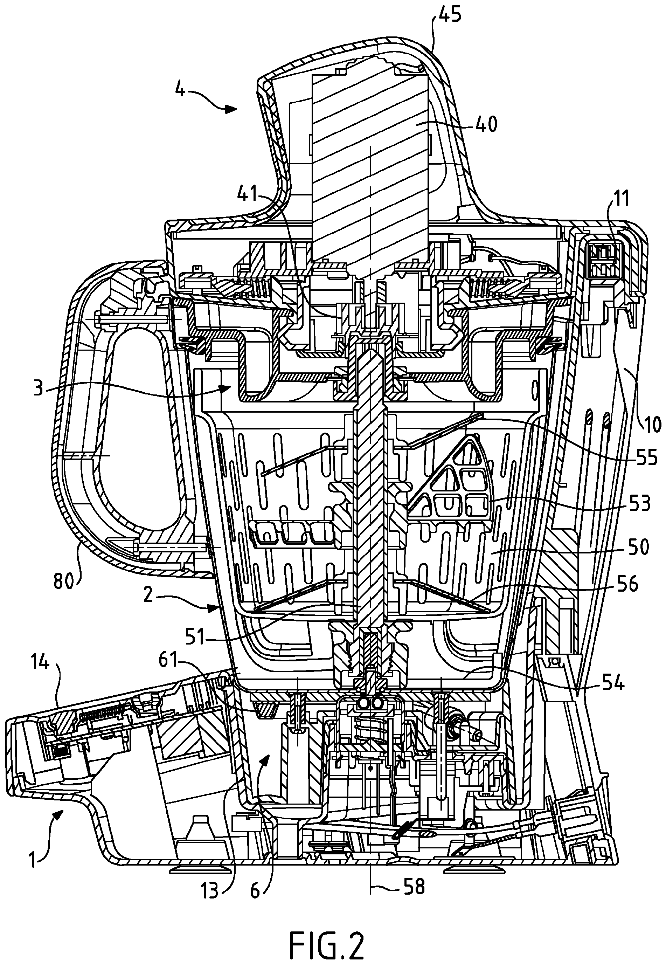

Les accessoires de préparation 5 peuvent être rangés dans le récipient de travail 2, tel que montré sur la figure 2.

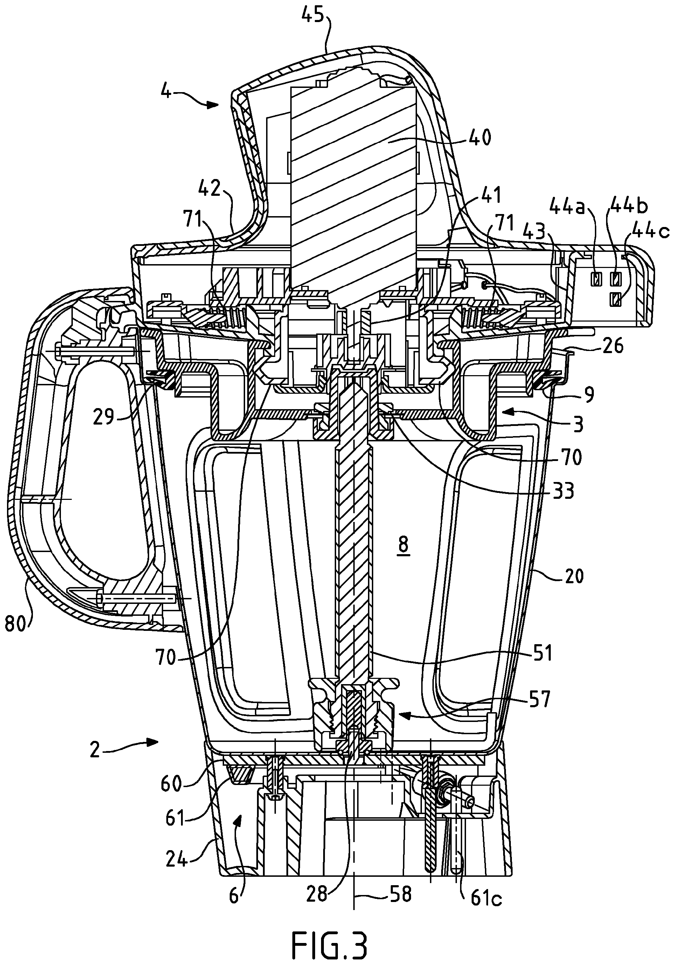

En configuration d'utilisation, l'appareil électroménager de préparation culinaire comporte un accessoire de travail rotatif 57 disposé dans le récipient de travail 2, tel que montré sur la figure 3. Le boîtier motorisé supérieur 4 est disposé sur le récipient de travail 2 pour entraîner en rotation l'accessoire de travail rotatif 57 selon un axe de rotation 58.

Dans l'exemple de réalisation illustré sur les figures, chacun des outils de travail rotatifs 52 peut être monté sur le moyeu 51 pour former l'accessoire de travail rotatif 57.

Le récipient de travail 2 présente un fond 25. Le récipient de travail 2 comporte un organe de centrage 28 s'élevant à partir du fond 25. Tel que visible sur la figure 3, l'accessoire de travail rotatif 57 est monté sur l'organe de centrage 28.

Le récipient de travail 2 porte le couvercle intermédiaire 3. Selon une forme de réalisation avantageuse, le couvercle intermédiaire 3 comprend un joint annulaire 9, mieux visible sur la figure 3. Le joint annulaire 9 vient en appui périphérique à l'intérieur du récipient de travail 2.

L'appareil électroménager de préparation culinaire illustré sur les figures comprend une enceinte de travail 8 définie par le récipient de travail 2 et le couvercle intermédiaire 3.

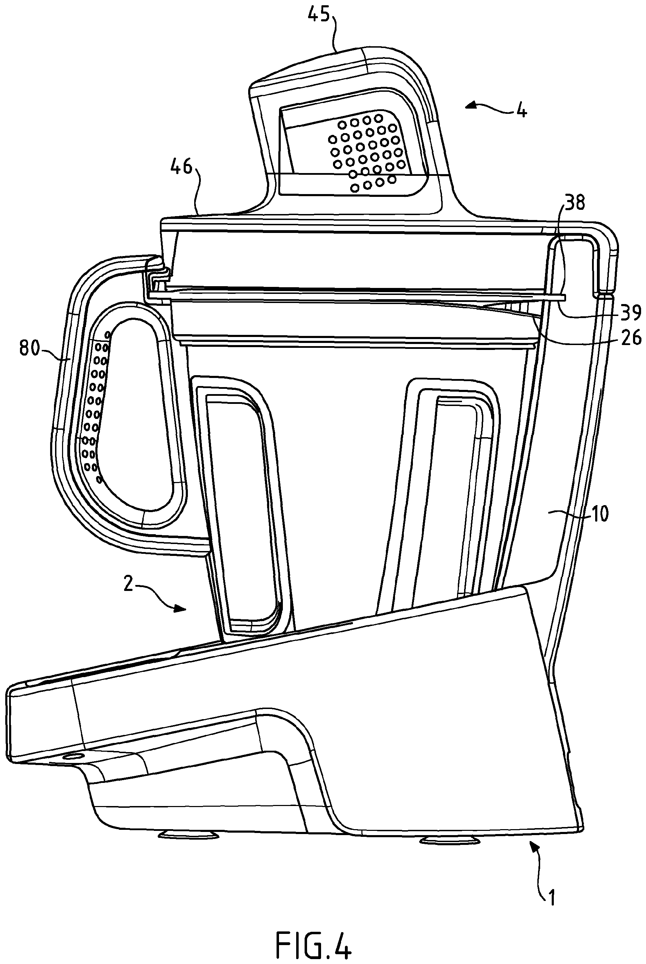

Le boîtier motorisé supérieur 4 est disposé sur le couvercle intermédiaire 3. La base 1 reçoit le récipient de travail 2, tel que montré sur la figure 4.

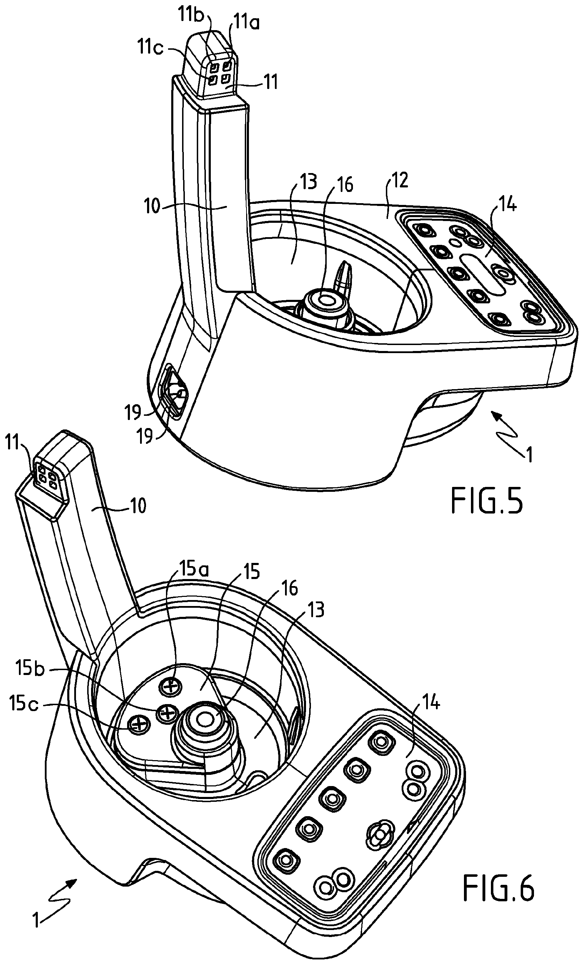

La base 1 comporte un montant 10, mieux visible sur les figures 5 et 6. Le montant 10 présente un connecteur électrique de motorisation 11 pour alimenter le boîtier motorisé supérieur 4. Le connecteur électrique de motorisation 11 est agencé latéralement dans le montant 10. Le connecteur électrique de motorisation 11 comporte trois douilles latérales 11a, 11b, 11c disposées dans une paroi latérale de la partie supérieure du montant 10. Les douilles latérales 11a, 11b, 11c présentent une entrée latérale agencée tangentiellement par rapport à l'axe de rotation 58.

La base 1 forme un socle 12 recevant le récipient de travail 2. A cet effet la base 1 présente une empreinte 13 ménagée dans le socle 12 pour recevoir la partie inférieure du récipient de travail 2. La base 1 présente un tableau de commande 14 disposé sur le socle 12. La partie supérieure du socle 12 est relevée en direction du montant 10. La partie supérieure du socle 12 est plane et entoure l'empreinte 13. Le montant 10 est agencé à l'opposé du tableau de commande 14 par rapport à l'empreinte 13.

L'appareil électroménager de préparation culinaire illustré sur les figures comporte un dispositif de chauffe électrique 6 pour chauffer les aliments contenus dans le récipient de travail 2.

Dans l'exemple de réalisation illustré sur les figures, le dispositif de chauffe électrique 6 est porté par le récipient de travail 2. Le récipient de travail 2 est monté amovible sur la base 1. A cet effet, la base 1 comporte un connecteur électrique de chauffe 15, mieux visible sur la figure 6, pour alimenter le dispositif de chauffe électrique 6 lorsque le récipient de travail 2 est disposé sur la base 1. Le connecteur électrique de chauffe 15 comporte trois douilles supérieures 15a, 15b, 15c disposées dans l'empreinte 13. Les douilles supérieures 15a, 15b, 15c présentent une entrée supérieure agencée parallèlement à l'axe de rotation 58.

La base 1 comporte également un dispositif de contrôle de température comportant un capteur 16 prévu pour venir en contact avec le récipient de travail 2 disposé sur la base 1. Plus particulièrement dans l'exemple de réalisation illustré sur les figures, le capteur 16 est agencé dans l'empreinte 13. La base 1 présente des broches d'alimentation 19, visibles sur la figure 5, prévues pour recevoir un cordon d'alimentation électrique, non représenté.

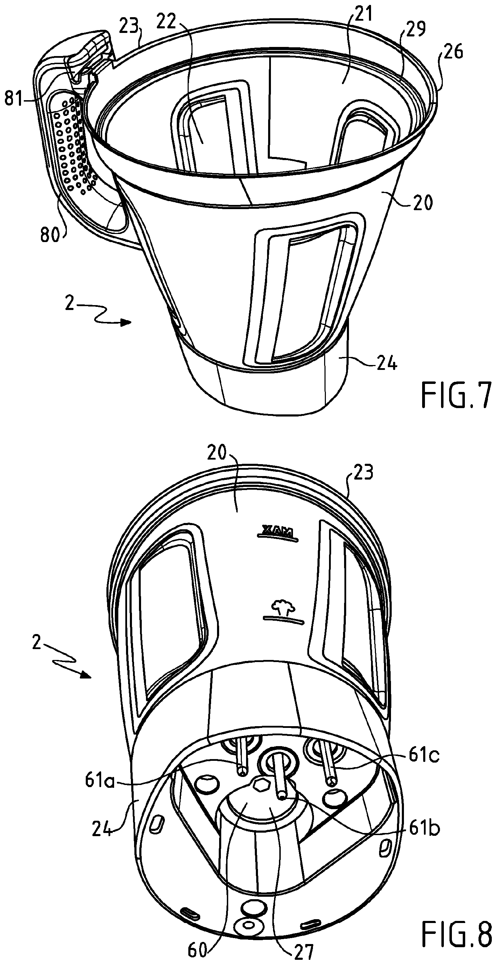

Le récipient de travail 2 illustré sur les figures 7 et 8 comporte un réceptacle 20 présentant une paroi latérale intérieure 21. Le réceptacle 20 est avantageusement réalisé en métal, de préférence en acier inoxydable. La paroi latérale intérieure 21 comporte des nervures internes 22. Le récipient de travail 2 présente un bord supérieur 23. Le bord supérieur 23 du récipient de travail 2 présente un décrochement supérieur 26, mieux visible sur la figure 3. Le récipient de travail 2 comporte une poignée 80. La poignée 80 est montée sur le réceptacle 20. Le décrochement supérieur 26 est agencé à l'opposé de la poignée 80.

Le récipient de travail 2 comporte une plaque de diffusion thermique 60 agencée sous le réceptacle 20. La plaque de diffusion thermique 60 est avantageusement réalisée en aluminium. Le récipient de travail 2 comporte une embase 24 prévue pour reposer sur la base 1. L'embase 24 est montée sous le réceptacle 20. Tel que représenté sur la figure 2, l'embase 24 est engagée dans l'empreinte 13 lorsque le récipient de travail 2 est en place sur la base 1. La paroi latérale intérieure 21 présente un décrochement annulaire 29.

Dans l'exemple de réalisation illustré sur les figures, le dispositif de chauffe électrique 6 est formé par un élément chauffant blindé 61 fixé sous la plaque de diffusion thermique 60. La plaque de diffusion thermique 60 est agencée sous le réceptacle 20. Tel que visible sur la figure 8, trois broches inférieures 61a, 61b, 61c sont issues de l'embase 24. Deux des broches inférieures 61a, 61b, 61c sont reliées aux bornes de l'élément chauffant blindé 61 et la troisième formant la terre est reliée au réceptacle 20 et/ou à la plaque de diffusion thermique 60.

Tel que visible sur les figures 3 et 8, l'embase 24 présente une ouverture 27 laissant apparaître le fond 25. L'ouverture 27 est prévue pour le passage du capteur 16. Tel que visible sur la figure 2, le capteur 16 vient en contact avec le fond 25 du récipient de travail 2. Le capteur 16 est agencé en position centrale par rapport au fond 25 du récipient de travail 2. L'axe de rotation 58 passe par le capteur 16.

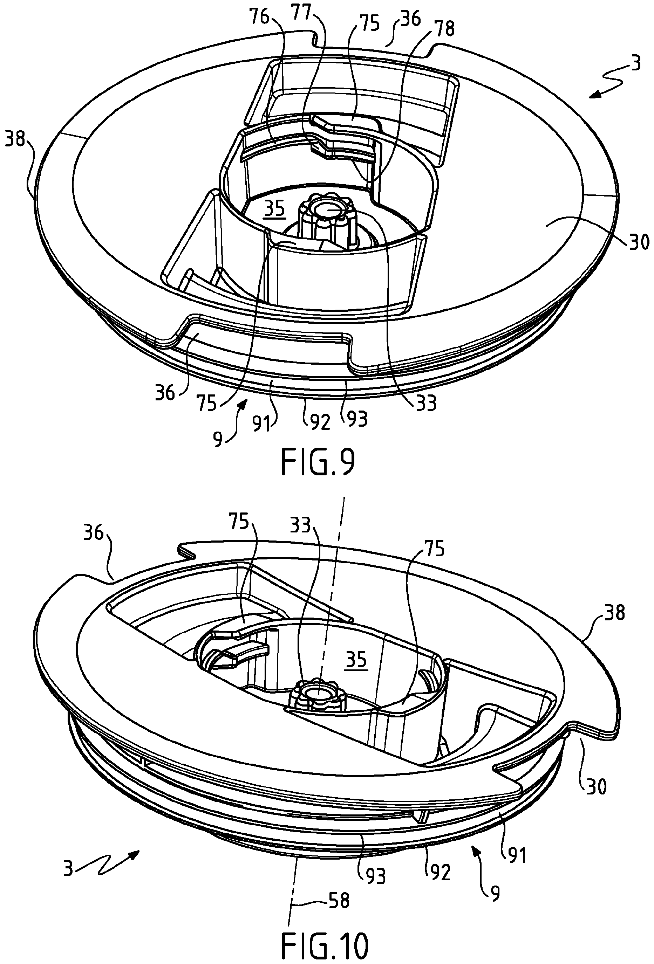

Le couvercle intermédiaire 3 comporte un corps 30 s'étendant autour de l'axe de rotation 58, tel que représenté sur les figures 9 et 10. Le corps 30 présente un logement central 35 s'étendant autour de l'axe de rotation 58. Le logement central 35 présente deux collerettes internes 75 prévues pour un verrouillage par baïonnette avec le boîtier motorisé supérieur 4. Le couvercle intermédiaire 3 présente deux organes de retenue 76 agencés dans le logement central 35. Les organes de retenue 76 et les collerettes internes 75 sont agencés de manière opposée. Les organes de retenue 76 sont décalés axialement et latéralement par rapport aux collerettes internes 75. Le couvercle intermédiaire 3 comporte un chanfrein latéral 77 agencé dans le logement central 35. Le chanfrein latéral 77 prolonge l'un des organes de retenue 76. Le chanfrein latéral 77 est agencé sous l'une des collerettes internes 75.

Le couvercle intermédiaire 3 est bloqué en rotation par rapport au récipient de travail 2. À cet effet le corps 30 présente deux échancrures périphériques 36.

L'une des échancrures périphériques 36 reçoit la poignée 80, et l'autre reçoit le montant 10. De préférence chacune des échancrures périphériques 36 est prévue pour recevoir indifféremment la poignée 80 ou le montant 10.

Le couvercle intermédiaire 3 comporte une bordure extérieure 38 présentant une partie inférieure 39 apparente lorsque le boîtier motorisé supérieur 4 est disposé sur le couvercle intermédiaire 3, tel que visible notamment sur la figure 4.

Plus particulièrement dans l'exemple de réalisation illustré sur les figures, le joint annulaire 9 comporte une couronne 91 montée sur le corps 30. Le joint annulaire 9 comporte une lèvre annulaire 92. Ainsi le joint annulaire 9 est un joint à lèvre. La lèvre annulaire 92 est issue de la couronne 91. Selon une forme de réalisation préférée, le joint annulaire 9 comporte une autre lèvre annulaire 93. L'autre lèvre annulaire 93 est issue de la couronne 91. L'autre lèvre annulaire 93 s'étend au dessus de la lèvre annulaire 92. Ainsi la lèvre annulaire 92 et l'autre lèvre annulaire 93 sont superposées.

Selon une forme de réalisation préférée, le couvercle intermédiaire 3 porte un organe de transmission rotatif 33. Tel que montré sur la figure 3, l'organe de transmission rotatif 33 est entrainé en rotation par le boîtier motorisé supérieur 4 et entraîne en rotation l'accessoire de travail rotatif 57 disposé dans le récipient de travail 2. Le logement central 35 entoure l'organe de transmission rotatif 33. A titre de variante, le boîtier motorisé supérieur 4 pourrait directement entraîner en rotation l'accessoire de travail rotatif 57, le couvercle intermédiaire 3 présentant alors un passage axial libre.

Le boîtier motorisé supérieur 4 loge un moteur électrique 40 entraînant un réducteur 41 prévu pour entraîner l'accessoire de travail rotatif 57 par l'intermédiaire de l'organe de transmission rotatif 33 du couvercle intermédiaire 3, tel que visible sur la figure 3. Le boîtier motorisé supérieur 4 comporte un capot supérieur 42 assemblé avec un capot inférieur 43. Le capot supérieur 42 forme un pommeau 45 prévu pour la préhension du boîtier motorisé supérieur 4. Tel que visible sur les figures 2 et 3, le moteur électrique 40 s'étend partiellement à l'intérieur du pommeau 45. Le pommeau 45 s'élève au dessus d'une partie circonférentielle 46 du boîtier motorisé supérieur 4, tel que visible sur les figures 1 à 4. Le capot inférieur 43 présente une partie centrale inférieure 48 proéminente.

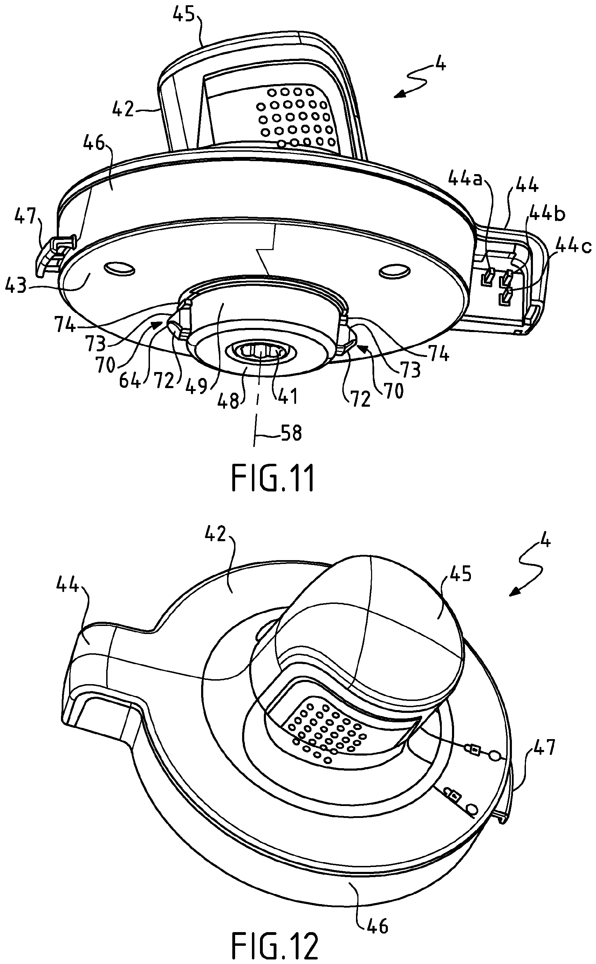

Tel que visible sur la figure 11, le boîtier motorisé supérieur 4 comporte trois broches latérales 44a, 44b, 44c logées en périphérie de la partie circonférentielle 46 du boîtier motorisé supérieur 4. Deux des broches latérales 44a, 44b, 44c sont prévues pour alimenter électriquement le moteur électrique 40, la troisième étant prévue pour mettre à la terre le moteur électrique 40. Les broches latérales 44a, 44b, 44c s'étendent transversalement sous un prolongement 44 du capot supérieur 42. Ainsi les broches latérales 44a, 44b, 44c sont agencées tangentiellement par rapport à l'ouverture supérieure du récipient de travail 2. Les broches latérales 44a, 44b, 44c s'étendent transversalement par rapport à l'axe de rotation 58. Deux des broches latérales 44a, 44b, 44c sont agencées à une distance identique de l'axe de rotation 58 mais à des niveaux différents, la troisième étant agencée au même niveau que la broche latérale la plus élevée, mais en étant plus proche de l'axe de rotation 58. Le prolongement 44 forme une corne et ménage une ouverture latérale et inférieure prévue pour le passage du connecteur électrique de motorisation 11 du montant 10.

Le boîtier motorisé supérieur 4 disposé sur le récipient de travail 2 peut être tourné sur le récipient de travail 2 pour amener le connecteur électrique de motorisation 11 en prise avec les broches latérales 44a, 44b, 44c du boîtier motorisé supérieur 4 et alimenter électriquement le boîtier motorisé supérieur 4.

Le boîtier motorisé supérieur 4 comporte deux organes d'accrochage 70 opposés, visibles sur les figures 3 et 11. Les organes d'accrochages 70 sont agencés dans une paroi latérale 49 de la partie centrale inférieure 48 du boîtier motorisé supérieur 4. Chaque organe d'accrochage 70 est monté mobile dans un plan perpendiculaire à l'axe de rotation 58, contre un élément de rappel élastique 71. Chaque organe d'accrochage 70 présente un chanfrein inférieur 72. Chaque organe d'accrochage 70 présente un chanfrein supérieur 73.

Le boîtier motorisé supérieur 4 comporte un organe de détection 64 repoussé par le couvercle intermédiaire 3 pour autoriser le fonctionnement de l'appareil lorsque le connecteur électrique de motorisation 11 alimente électriquement le boîtier motorisé supérieur 4. Plus particulièrement dans l'exemple de réalisation illustré sur les figures, l'organe de détection 64 et l'un des organes d'accrochage 70 appartiennent à une pièce 79 montée mobile contre l'élément de rappel élastique 71. Ainsi l'organe de détection 64 est monté mobile contre l'élément de rappel élastique 71, selon une direction principalement radiale par rapport à l'axe de rotation 58. Dans l'exemple de réalisation illustré sur les figures, l'organe de détection 64 est agencé entre le chanfrein inférieur 72 et le chanfrein supérieur 73.

Le boîtier motorisé supérieur 4 comporte une patte de verrouillage 47 agencée en périphérie de la partie circonférentielle 46. Plus particulièrement, la patte de verrouillage 47 est agencée à l'opposé du prolongement 44, tel que bien visible sur la figure 12.

Le boîtier motorisé supérieur 4 est verrouillé par baïonnette avec le couvercle intermédiaire 3 et peut occuper par rotation sur le couvercle intermédiaire 3 successivement une position déverrouillée et une position verrouillée. A cet effet le boîtier motorisé supérieur 4 présente des ergots extérieurs 74 prévus pour être engagés sous les collerettes internes 75 du couvercle intermédiaire 3. Les ergots extérieurs 74 sont agencées sur la paroi latérale 49 de la partie centrale inférieure 48 du boîtier motorisé supérieur 4. Les ergots extérieurs 74 sont agencés au dessus des organes d'accrochage 70.

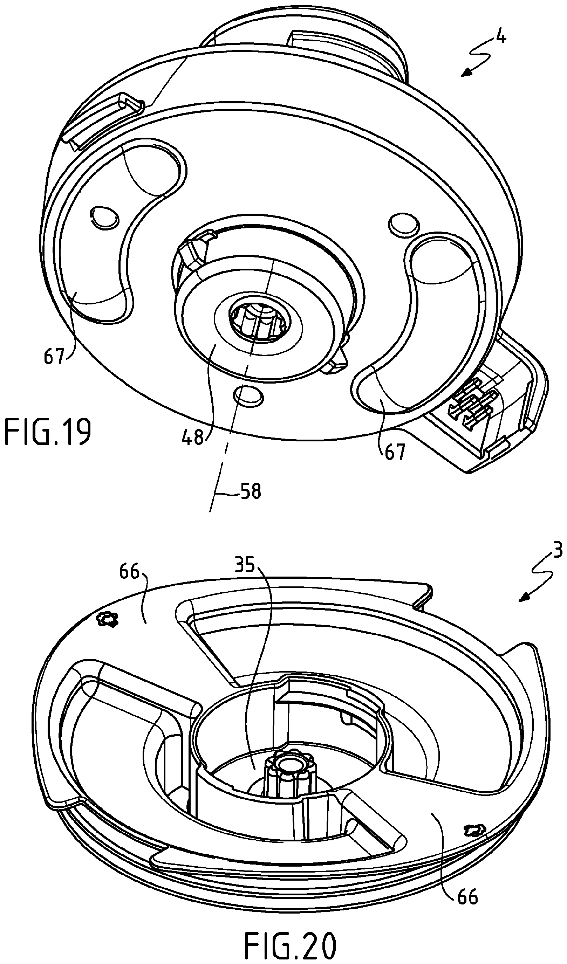

Le boîtier motorisé supérieur 4 illustré sur la figure 19 diffère du boîtier motorisé supérieur 4 illustré sur les figures 1 à 4, 11 et 12 en ce qu'il comporte deux protubérances inférieures 67 agencées de manière opposée par rapport à l'axe de rotation 58. Les protubérances inférieures 67 sont agencées de part et d'autre de la partie centrale inférieure 48.

Le couvercle intermédiaire 3 illustré sur la figure 20 diffère du couvercle intermédiaire 3 illustré sur les figures 1 à 4, 9 et 10 en ce qu'il comporte deux protubérances supérieures 66 agencées de manière opposée par rapport à l'axe de rotation 58. Les protubérances supérieures 66 sont agencées de part et d'autre du logement central 35.

Selon l'invention, le boîtier motorisé supérieur 4 peut être tourné sur le couvercle intermédiaire 3 pour occuper une position de désaccouplement dans laquelle un contact entre les protubérances supérieures 66 et les protubérances inférieures 67 soulève le boîtier motorisé supérieur 4 par rapport au couvercle intermédiaire 3 et dégage les organes d'accrochage 70 des organes de retenue 76. La position de déverrouillage est de préférence disposée entre la position de verrouillage et la position de désaccouplement.

A titre de variante complémentaire, le couvercle intermédiaire 3 peut comporter au moins une protubérance supérieure 66 et le boîtier motorisé supérieur 4 peut comporter au moins une protubérance inférieure 67. Lorsque le boîtier motorisé supérieur 4 est tourné sur le couvercle intermédiaire 3 vers la position de désaccouplement, le contact entre la ou au moins l'une des protubérances supérieures 66 et la ou au moins l'une des protubérances inférieures 67, et de préférence les contacts entre les protubérances supérieures 66 et les protubérances inférieures 67, soulève(nt) le boîtier motorisé supérieur 4 par rapport au couvercle intermédiaire 3.

L'appareil électroménager de préparation culinaire illustré sur les figures s'utilise et fonctionne de la manière suivante.

L'utilisateur dispose le récipient de travail 2 sur la base 1, puis met en place l'accessoire de travail rotatif 57 dans le récipient de travail 2. L'utilisateur dispose ensuite le couvercle intermédiaire 3 dans le récipient de travail 2. La bordure extérieure 38 du couvercle intermédiaire 3 s'étend au dessus du bord supérieur 23 du récipient de travail 2, tel que visible sur la figure 4. L'utilisateur dispose ensuite le boîtier motorisé supérieur 4 sur le couvercle intermédiaire 3, puis tourne le boîtier motorisé supérieur 4 par rapport au récipient de travail 2, si nécessaire en tenant la poignée 80.

Le boîtier motorisé supérieur 4 est verrouillé avec le montant 10 par rotation autour de l'axe de rotation 58. Les broches latérales 44a, 44b, 44c du boîtier motorisé supérieur 4 sont engagées dans les douilles latérales 11a, 11b, 11c du montant 10.

Le boîtier motorisé supérieur 4 est verrouillé avec le récipient de travail 2 par rotation autour de l'axe de rotation 58, plus particulièrement avec la poignée 80. La patte de verrouillage 47 du boîtier motorisé supérieur 4 est engagée dans un logement de verrouillage 81 de la poignée 80.

Ainsi par rotation autour de l'axe de rotation 58, le boîtier motorisé supérieur 4 est verrouillé de manière opposée d'une part avec le montant 10 et d'autre part avec le récipient de travail 2.

Le boîtier motorisé supérieur 4 disposé sur le récipient de travail 2 peut occuper successivement par rotation par rapport au récipient de travail 2 une position déverrouillée, dans laquelle le boîtier motorisé supérieur 4 peut être retiré du récipient de travail 2, une position verrouillée dans laquelle le boîtier motorisé supérieur 4 est retenu sur le récipient de travail 2, dans laquelle le connecteur électrique de motorisation 11 n'alimente pas électriquement le boîtier motorisé supérieur 4 et une position de travail dans laquelle le boîtier motorisé supérieur 4 est retenu sur le récipient de travail 2 et dans laquelle le connecteur électrique de motorisation 11 alimente électriquement le boîtier motorisé supérieur 4.

Le boîtier motorisé supérieur 4 peut occuper par rotation sur le couvercle intermédiaire 3 successivement la position déverrouillée, dans laquelle le boîtier motorisé supérieur 4 peut être retiré du récipient de travail 2, puis la position verrouillée, dans laquelle le boîtier motorisé supérieur 4 est verrouillé sur le récipient de travail 2, puis la position de travail.

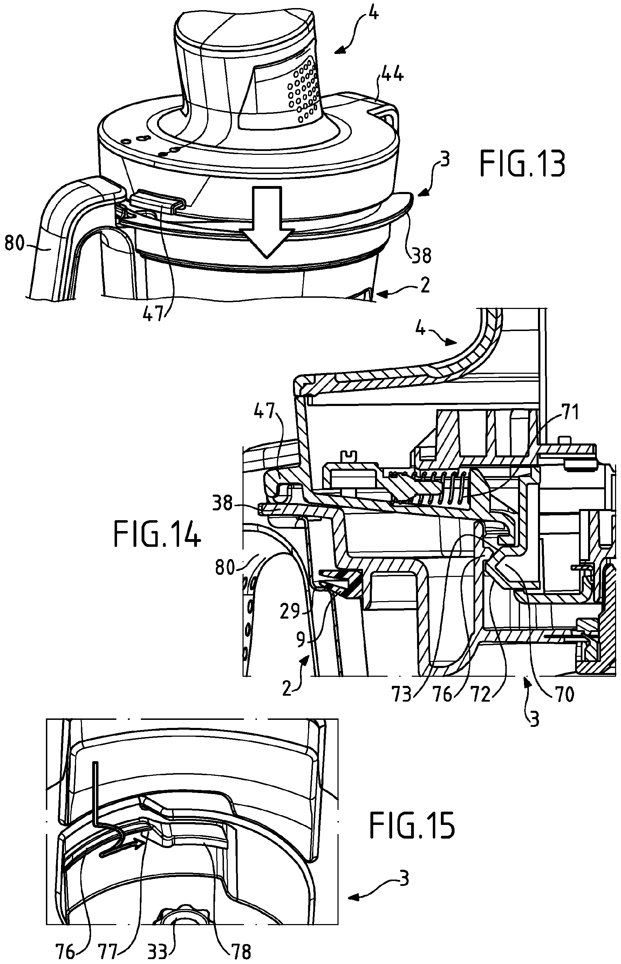

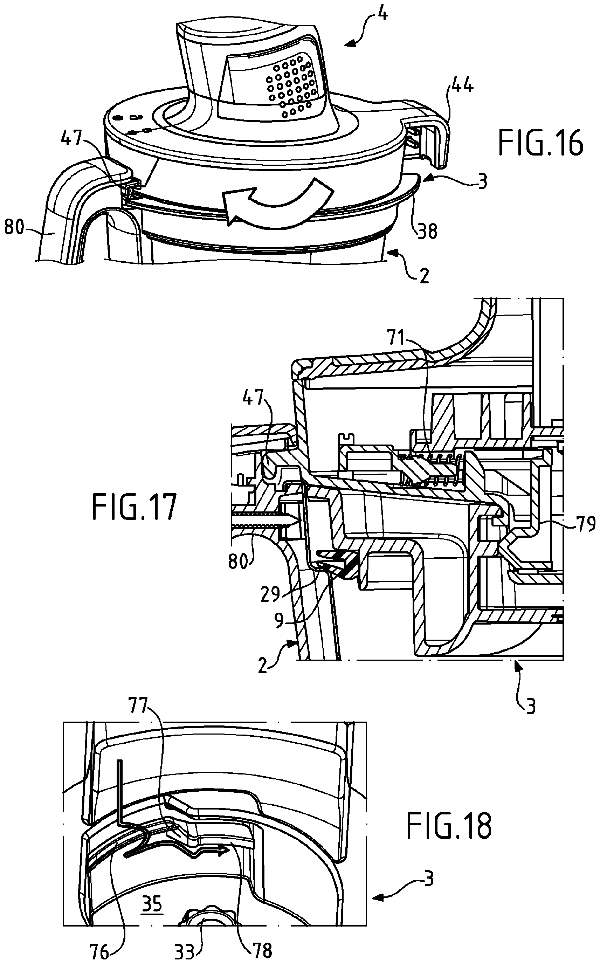

Tel que représenté sur les figures 13 à 18, les organes d'accrochage 70 viennent en prise avec les organes de retenue 76 lorsque le boîtier motorisé supérieur 4 est mis en place sur le couvercle intermédiaire 3 selon une direction principalement parallèle à l'axe de rotation 58, et de préférence en translation parallèlement à l'axe de rotation 58, pour soulever le couvercle intermédiaire 3 avec le boîtier motorisé supérieur 4 lorsque le boîtier motorisé supérieur 4 est retiré du récipient de travail 2.

Lorsque le boîtier motorisé supérieur 4 est mis en place sur le couvercle intermédiaire 3, les organes de retenue 76 du couvercle intermédiaire repoussent les chanfreins inférieurs 72 contre les éléments de rappel élastique 71. Les organes d'accrochage 70 viennent en prise sous les organes de retenue 76, tel que représenté sur la figure 14. Plus particulièrement, les chanfreins supérieurs 73 viennent en prise sous les organes de retenue 76.

Lorsque le boîtier motorisé supérieur 4 est tourné sur le couvercle intermédiaire 3 pour alimenter électriquement le boîtier motorisé supérieur 4, le chanfrein latéral 77 du couvercle intermédiaire 3 repousse l'organe de détection 64 contre l'élément de rappel élastique 71 vers la position repoussée. Le chanfrein latéral 77 est prolongé par un renfoncement 78 autorisant une détente de l'élément de rappel élastique 71 lorsque le boîtier motorisé supérieur 4 est tourné sur le couvercle intermédiaire 3 de la position déverrouillée vers la position verrouillée, ce qui permet de signaler un verrouillage correct du boîtier motorisé supérieur 4. L'organe de détection 64 en position repoussée actionne un interrupteur électrique (non représenté) autorisant le fonctionnement de l'appareil.

A titre de variante, les broches latérales 44a, 44b, 44c ne sont pas nécessairement formées par des tiges adjacentes, mais pourraient notamment être formées par des éléments concentriques, les douilles latérales 11a, 11b, 11c étant adaptées en conséquence.

A titre de variante, le boîtier motorisé supérieur 4 peut comporter au moins deux broches latérales engagées chacune dans une douille latérale du montant 10. Le récipient de travail 2 peut comporter au moins deux broches inférieures engagées chacune dans une douille supérieure de la base.

A titre de variante, l'élément de rappel élastique 71 peut être commun aux deux organes d'accrochage 70.

A titre de variante, le boîtier motorisé supérieur 4 peut comporter au moins un organe d'accrochage 70 et le couvercle intermédiaire 3 peut comporter au moins un organe de retenue 76. L'organe d'accrochage 70 vient alors en prise avec l'organe de retenue 76 lorsque le boîtier motorisé supérieur 4 est mis en place sur le couvercle intermédiaire 3 selon une direction principalement parallèle à l'axe de rotation 58, pour soulever le couvercle intermédiaire 3 avec le boîtier motorisé supérieur 4 lorsque le boîtier motorisé supérieur 4 est retiré du récipient de travail 2.

A titre de variante, le ou au moins l'un des organes de retenue 76 peut être monté mobile dans un plan principalement perpendiculaire à l'axe de rotation 58 contre un élément de rappel élastique 71. Le ou au moins l'un des organes de retenue 76 peut alors présenter un chanfrein supérieur repoussé par le boîtier supérieur motorisé 4 contre l'élément de rappel élastique 71 lorsque le boîtier motorisé supérieur 4 est mis en place sur le couvercle intermédiaire 3. Le ou au moins l'un des organes de retenue 76 peut présenter un chanfrein inférieur venant en prise sous le ou au moins l'un des organes d'accrochage 70, lorsque le boîtier motorisé supérieur 4 est en place sur le couvercle intermédiaire 3.

A titre de variante, l'élément de rappel élastique 71 n'est pas nécessairement formé par un ressort associé à l'organe d'accrochage ou à l'organe de retenue. L'élément de rappel élastique peut notamment être formé par une partie élastiquement déformable reliée à l'organe d'accrochage ou à l'organe de retenue. La partie élastiquement déformable d'une part, et l'organe d'accrochage ou l'organe de retenue, d'autre part, peuvent appartenir à une même pièce.

La présente invention n'est nullement limitée à l'exemple de réalisation décrit et à ses variantes, mais englobe de nombreuses modifications dans le cadre des revendications.

## Revendications

1. Appareil électroménager de préparation culinaire comportant un récipient de travail (2), un accessoire de travail rotatif (57) disposé dans le récipient de travail (2), un boîtier motorisé supérieur (4) disposé sur le récipient de travail (2) pour entraîner en rotation l'accessoire de travail rotatif (57) selon un axe de rotation (58), un couvercle intermédiaire (3) porté par le récipient de travail (2), le couvercle intermédiaire (3) étant bloqué en rotation par rapport au récipient de travail (2), le boîtier motorisé supérieur (4) étant disposé sur le couvercle intermédiaire (3), le boîtier motorisé supérieur (4) comportant au moins un organe d'accrochage (70), le couvercle intermédiaire (3) comportant au moins un organe de retenue (76), le ou au moins l'un des organes d'accrochage (70), respectivement le ou au moins l'un des organes de retenue (76), étant monté mobile dans un plan principalement perpendiculaire à l'axe de rotation (58) contre un élément de rappel élastique (71), le ou au moins l'un des organes d'accrochage (70), respectivement le ou au moins l'un des organes de retenue (76), présentant un chanfrein inférieur (72), respectivement un chanfrein supérieur, de sorte que le couvercle intermédiaire (3), respectivement le boîtier motorisé supérieur (4), repousse le chanfrein inférieur (72), respectivement le chanfrein supérieur, contre l'élément de rappel élastique (71) lorsque le boîtier motorisé supérieur (4) est mis en place sur le couvercle intermédiaire (3), et que l'organe d'accrochage (70) vient en prise avec l'organe de retenue (76) lorsque le boîtier motorisé supérieur (4) est mis en place sur le couvercle intermédiaire (3) selon une direction principalement parallèle à l'axe de rotation (58), pour soulever le couvercle intermédiaire (3) avec le boîtier motorisé supérieur (4) lorsque le boîtier motorisé supérieur (4) est retiré du récipient de travail (2), le boîtier motorisé supérieur (4) étant verrouillé avec le récipient de travail (2) par rotation autour de l'axe de rotation (58), en ce que l'organe d'accrochage (70) est en prise avec l'organe de retenue (76) lorsque le boîtier motorisé supérieur (4) est déverrouillé, **caractérisé en ce que** le couvercle intermédiaire (3) comporte au moins une protubérance supérieure (66), **en ce que** le boîtier motorisé supérieur (4) comporte au moins une protubérance inférieure (67), et **en ce que** le boîtier motorisé supérieur (4) peut être tourné sur le couvercle intermédiaire (3) pour occuper une position de désaccouplement dans laquelle un contact entre la ou au moins l'une des protubérances supérieures (66) et la ou au moins l'une des protubérances inférieures (67) soulève le boîtier motorisé supérieur (4) par rapport au couvercle intermédiaire (3) et dégage le ou les organe(s) d'accrochage (70) du ou des organe(s) de retenue (76).

2. Appareil électroménager de préparation culinaire selon la revendication 1, **caractérisé en ce que** le boîtier motorisé supérieur (4) comporte deux organes d'accrochage (70) opposés, **en ce que** le couvercle intermédiaire (3) comporte deux organes de retenue (76) opposés, et **en ce que** les organes d'accrochage (70) viennent en prise avec les organes de retenue (76) lorsque le boîtier motorisé supérieur (4) est mis en place sur le couvercle intermédiaire (3) selon une direction principalement parallèle à l'axe de rotation (58), pour soulever le couvercle intermédiaire (3) avec le boîtier motorisé supérieur (4) lorsque le boîtier motorisé supérieur (4) est retiré du récipient de travail (2).

3. Appareil électroménager de préparation culinaire selon l'une des revendications 1 ou 2, **caractérisé en ce que** le ou au moins l'un des organes d'accrochage (70), respectivement le ou au moins l'un des organes de retenue (76), présente un chanfrein supérieur (73), respectivement un chanfrein inférieur, venant en prise sous le ou au moins l'un des organes de retenue (76), respectivement sur le ou au moins l'un des organes d'accrochage (70), lorsque le boîtier motorisé supérieur (4) est en place sur le couvercle intermédiaire (3).

4. Appareil électroménager de préparation culinaire selon l'une des revendications 1 à 3, **caractérisé en ce que** le boîtier motorisé supérieur (4) est verrouillé par baïonnette avec le couvercle intermédiaire (3) et peut occuper par rotation sur le couvercle intermédiaire (3) successivement une position déverrouillée et une position verrouillée.

5. Appareil électroménager de préparation culinaire selon l'une des revendications 1 à 4, **caractérisé en ce que** le boîtier motorisé supérieur (4) est verrouillé avec une poignée (80) du récipient de travail (2) par rotation autour de l'axe de rotation (58).

6. Appareil électroménager de préparation culinaire selon la revendication 5, **caractérisé en ce que** le boîtier motorisé supérieur (4) comporte une patte de verrouillage (47) agencée en périphérie d'une partie circonférentielle (46), et en que la patte de verrouillage (47) est engagée dans un logement de verrouillage (81) de la poignée (80).

7. Appareil électroménager de préparation culinaire selon l'une des revendications 1 à 6, **caractérisé en ce qu'**il comporte une base (1) recevant le récipient de travail (2), **en ce que** la base (1) comporte un montant (10) présentant un connecteur électrique de motorisation (11) pour alimenter électriquement le boîtier motorisé supérieur (4), et **en ce que** le boîtier motorisé supérieur (4) est verrouillé avec le montant (10) par rotation autour de l'axe de rotation (58).

8. Appareil électroménager de préparation culinaire selon la revendication 7, **caractérisé en ce que** le corps (30) présente deux échancrures périphériques (36), **en ce que** l'une des échancrures périphériques (36) reçoit la poignée (80), **en ce que** l'autre des échancrures périphériques (36) reçoit le montant (10), et **en ce que** de préférence chacune des échancrures périphériques (36) est prévue pour recevoir indifféremment la poignée (80) ou le montant (10).

9. Appareil électroménager de préparation culinaire selon l'une des revendications 1 à 8, **caractérisé en ce qu'**il comporte un dispositif de chauffe électrique (6) pour chauffer les aliments contenus dans le récipient de travail (2).

10. Appareil électroménager de préparation culinaire selon la revendication 7 et la revendication 9, **caractérisé en ce que** le dispositif de chauffe électrique (6) est porté par le récipient de travail (2) et **en ce que** la base (1) comporte un connecteur électrique de chauffe (15) pour alimenter électriquement le dispositif de chauffe électrique (6) lorsque le récipient de travail (2) est disposé sur la base (1).

11. Appareil électroménager de préparation culinaire selon l'une des revendications 1 à 10, **caractérisé en ce que** le couvercle intermédiaire (3) comporte une bordure extérieure (38) présentant une partie inférieure (39) apparente lorsque le boîtier motorisé supérieur (4) est disposé sur le couvercle intermédiaire (3).

## Patentansprüche

1. Elektrohaushaltseinrichtung zur Essenszubereitung, umfassend einen Arbeitsbehälter (2), ein drehbares Arbeitszubehör (57), das in dem Arbeitsbehälter (2) angeordnet ist, ein oberes motorisiertes Gehäuse (4), das auf dem Arbeitsbehälter (2) angeordnet ist, um das drehbare Arbeitszubehör (57) gemäß einer Rotationsachse (58) in Rotation anzutreiben, einen Zwischendeckel (3), der von dem Arbeitsbehälter (2) getragen wird, wobei der Zwischendeckel (3) in Bezug auf den Arbeitsbehälter (2) in Rotation blockiert ist, wobei das obere motorisierte Gehäuse (4) auf dem Zwischendeckel (3) angeordnet ist, wobei das obere motorisierte Gehäuse (4) mindestens ein Einhängeorgan (70) umfasst, wobei der Zwischendeckel (3) mindestens ein Rückhalteorgan (76) umfasst, wobei das oder mindestens eines der Einhängeorgane (70), beziehungsweise das oder mindestens eines der Rückhalteorgane (76) in einer hauptsächlich zur Rotationsachse (58) senkrechten Ebene an einem elastischen Rückstellelement (71) beweglich montiert ist, wobei das oder mindestens eines der Einhängeorgane (70), beziehungsweise das oder mindestens eines der Rückhalteorgane (76) eine untere Fase (72), beziehungsweise eine obere Fase aufweist, sodass der Zwischendeckel (3), beziehungsweise das obere motorisierte Gehäuse (4) die untere Fase (72), beziehungsweise die obere Fase gegen das elastische Rückstellorgan (71) zurückdrängt, wenn das obere motorisierte Gehäuse (4) auf dem Zwischendeckel (3) angebracht wird, und das Einhängeorgan (70) in Eingriff mit dem Rückhalteorgan (76) kommt, wenn das obere motorisierte Gehäuse (4) in einer hauptsächlich parallelen Richtung zur Rotationsachse (58) auf dem Zwischendeckel (3) angebracht wird, um den Zwischendeckel (3) mit dem oberen motorisierten Gehäuse (4) anzuheben, wenn das obere motorisierte Gehäuse (4) vom Arbeitsbehälter (2) abgenommen wird, wobei das obere motorisierte Gehäuse (4) mit dem Arbeitsbehälter (2) durch Rotation um die Rotationsachse (58) verriegelt wird, dadurch, dass das Einhängeorgan (70) in Eingiff mit dem Rüchalteorgan (76) steht, wenn das obere motorisierte Gehäuse (4) verriegelt ist, **dadurch gekennzeichnet, dass** der Zwischendeckel (3) mindestens einen oberen Vorsprung (66) umfasst, dadurch, dass das obere motorisierte Gehäuse (4) mindestens einen unteren Vorsprung (67) umfasst, und dadurch, dass das obere motorisierte Gehäuse (4) auf dem Zwischendeckel (3) gedreht werden kann, um eine Entkopplungsposition einzunehmen, in der ein Kontakt zwischen dem oder mindestens einem der oberen Vorsprünge (66) und dem oder einem der unteren Vorsprünge (67) das obere motorisierte Gehäuse (4) in Bezug auf den Zwischendeckel (3) anhebt, und das oder die Einhängeorgan(e) (70) von dem oder den Rückhalteorgan(en) (76) freilegt.

2. Elektrohaushaltseinrichtung zur Essenszubereitung nach Anspruch 1, **dadurch gekennzeichnet, dass** das obere motorisierte Gehäuse (4) zwei gegenüberliegende Einhängeorgane (70) umfasst, dadurch, dass der Zwischendeckel (3) zwei gegenüberliegende Rückhalteorgane (76) umfasst, und dadurch, dass die Einhängeorgane (70) in Eingriff mit den Rückhalteorganen (76) kommen, wenn das obere motorisierte Gehäuse (4) in einer zur Rotationsachse (58) hauptsächlich parallelen Richtung auf dem Zwischendeckel (3) angebracht wird, um den Zwischendeckel (3) mit dem oberen motorisierten Gehäuse (4) anzuheben, wenn das obere motorisierte Gehäuse (4) vom Arbeitsbehälter (2) abgenommen wird.

3. Elektrohaushaltseinrichtung zur Essenszubereitung nach einem der Ansprüche 1 oder 2, **dadurch gekennzeichnet, dass** das oder mindestens eines der Einhängeorgane (70), beziehungsweise das oder mindestens eines der Rückhalteorgane (76) eine obere Fase (73), beziehungsweise eine untere Fase aufweist, die unter dem oder mindestens einem der Rückhalteorgane (76), beziehungsweise auf dem oder mindestens einem der Einhängeorgane (70) in Eingriff kommt, wenn das obere motorisierte Gehäuse (4) auf dem Zwischendeckel (3) angebracht ist.

4. Elektrohaushaltseinrichtung zur Essenszubereitung nach einem der Ansprüche 1 bis 3, **dadurch gekennzeichnet, dass** das obere motorisierte Gehäuse (4) durch ein Bajonett mit dem Zwischendeckel (3) verriegelt wird, und durch Rotation auf dem Zwischendeckel (3) nacheinander eine entriegelte Position und eine verriegelte Position einnehmen kann.

5. Elektrohaushaltseinrichtung zur Essenszubereitung nach einem der Ansprüche 1 bis 4, **dadurch gekennzeichnet, dass** das obere motorisierte Gehäuse (4) mit einem Griff (80) des Arbeitsbehälters (2) durch Rotation um die Rotationsachse (58) verriegelt wird.

6. Elektrohaushaltseinrichtung zur Essenszubereitung nach Anspruch 5, **dadurch gekennzeichnet, dass** das obere motorisierte Gehäuse (4) eine Verriegelungslasche (47) umfasst, die an der Peripherie eines Umfangsabschnitts (46) angeordnet ist, und dadurch, dass die Verriegelungslasche (47) in eine Verriegelungsaufnahme (81) des Griffes (80) eingreift.

7. Elektrohaushaltseinrichtung zur Essenszubereitung nach einem der Ansprüche 1 bis 6, **dadurch gekennzeichnet, dass** sie einen Sockel (1) umfasst, der den Arbeitsbehälter (2) aufnimmt, dadurch, dass der Sockel (1) eine Stütze (10) umfasst, die einen elektrischen Motorisierungsstecker (11) zur elektrischen Versorgung des oberen motorisierten Gehäuses (4) aufweist, und dadurch, dass das obere motorisierte Gehäuse (4) durch Rotation um die Rotationsachse (58) mit der Stütze (10) verriegelt wird.

8. Elektrohaushaltseinrichtung zur Essenszubereitung nach Anspruch 7, **dadurch gekennzeichnet, dass** der Körper (30) zwei periphere Aussparungen (36) aufweist, dadurch, dass eine der peripheren Aussparungen (36) den Griff (80) aufnimmt, dadurch, dass die andere der peripheren Aussparungen (36) die Stütze (10) aufnimmt, und dadurch, dass vorzugsweise jede der peripheren Aussparungen (36) vorgesehen ist, um gleichermaßen den Griff (80) oder die Stütze (10) aufzunehmen.

9. Elektrohaushaltseinrichtung zur Essenszubereitung nach einem der Ansprüche 1 bis 8, **dadurch gekennzeichnet, dass** sie eine elektrische Heizvorrichtung (6) umfasst, um die Nahrungsmittel, die in dem Arbeitsbehälter (2) enthalten sind, zu erhitzen.

10. Elektrohaushaltseinrichtung zur Essenszubereitung nach Anspruch 7 und Anspruch 9, **dadurch gekennzeichnet, dass** die elektrische Heizvorrichtung (6) von dem Arbeitsbehälter (2) getragen wird, und dadurch, dass der Sockel (1) einen elektrischen Heizstecker (15) zur elektrischen Versorgung der elektrischen Heizvorrichtung (6) umfasst, wenn der Arbeitsbehälter (2) auf dem Sockel (1) angeordnet ist.

11. Elektrohaushaltseinrichtung zur Essenszubereitung nach einem der Ansprüche 1 bis 10, **dadurch gekennzeichnet, dass** der Zwischendeckel (3) eine äußere Umrandung (38) umfasst, die einen unteren sichtbaren Teil (39) aufweist, wenn das obere motorisierte Gehäuse (4) auf dem Zwischendeckel (3) angeordnet ist.

## Claims

1. Electrical kitchen appliance comprising a work container (2), a rotary work accessory (57) disposed in the work container (2), an upper motorised casing (4) disposed on the work container (2) to rotate the rotary work accessory (57) about an axis of rotation (58), an intermediate cover (3) carried by the work container (2), the intermediate cover (3) being rotatably blocked with respect to the work container (2), the upper motorised casing (4) being disposed on the intermediate cover (3), the upper motorised casing (4) comprising at least one fastening member (70), the intermediate cover (3) comprising at least one retaining member (76), the or at least one of the fastening members (70), respectively the or at least one of the retaining members (76), being movably mounted in a plane mainly perpendicularly to the axis of rotation (58) against an elastic return element (71), the or at least one of the fastening members (70), respectively the or at least one of the retaining members (76), having a lower chamfer (72), respectively an upper chamfer, such that the intermediate cover (3), respectively the upper motorised casing (4), repels the lower chamfer (72), respectively the upper chamfer, against the elastic return element (71) when the upper motorised casing (4) is implemented on the intermediate cover (3), and that the fastening member (70) is engaged with the retaining member (76) when the upper motorised casing (4) is implemented on the intermediate cover (3) in a direction mainly parallel to the axis of rotation (58), to raise the intermediate cover (3) with the upper motorised casing (4) when the upper motorised casing (4) is removed from the work container (2), the upper motorised casing (4) being locked with the work container (2) by rotation about the axis of rotation (58), in that the fastening member (70) is engaged with the retaining member (76) when the upper motorised casing (4) is unlocked, **characterised in that** the intermediate cover (3) comprises at least one upper projection (66), **in that** the upper motorised casing (4) comprises at least one lower projection (67), and **in that** the upper motorised casing (4) can be rotated on the intermediate cover (3) to occupy an uncoupling position, wherein a contact between the or at least one of the upper projections (66) and the or at least one of the lower projections (67) raises the upper motorised casing (4) with respect to the intermediate cover (3) and releases the fastening member(s) (70) or the retaining member(s) (76).

2. Electrical kitchen appliance according to claim 1, **characterised in that** the upper motorised casing (4) comprises two opposite fastening members (70), **in that** the intermediate cover (3) comprises two opposite retaining members (76), and **in that** the fastening members (70) engage with the retaining members (76) when the upper motorised casing (4) is implemented on the intermediate cover (3) in a direction mainly parallel to the axis of rotation (58), to raise the intermediate cover (3) with the upper motorised casing (4) when the upper motorised casing (4) is removed from the work container (2).

3. Electrical kitchen appliance according to one of claims 1 or 2, **characterised in that** the or at least one of the fastening members (70), respectively the or at least one of the retaining members (76), has an upper chamfer (73), respectively a lower chamfer, engaging under the or at least one of the retaining members (76), respectively on the or at least one of the fastening members (70), when the upper motorised casing (4) is in place on the intermediate cover (3).

4. Electrical kitchen appliance according to one of claims 1 to 3, **characterised in that** the upper motorised casing (4) is locked by bayonet with the intermediate cover (3) and can rotatably occupy on the intermediate cover (3) successively an unlocked position and a locked position.

5. Electrical kitchen appliance according to one of claims 1 to 4, **characterised in that** the upper motorised casing (4) is locked with a handle (80) of the work container (2) by rotation about the axis of rotation (58).

6. Electrical kitchen appliance according to claim 5, **characterised in that** the upper motorised casing (4) comprises a locking tab (47) arranged at the periphery of a circumferential part (46), and **in that** the locking tab (47) is engaged in a locking housing (81) of the handle (80).

7. Electrical kitchen appliance according to one of claims 1 to 6, **characterised in that** it comprises a base (1) receiving the work container (2), **in that** the base (1) comprises an upright (10) having an electrical motorisation connector (11) to electrically power the upper motorised casing (4), and **in that** the upper motorised casing (4) is locked with the upright (10) by rotation about the axis of rotation (58).

8. Electrical kitchen appliance according to claim 7, **characterised in that** the body (30) has two peripheral notches (36), **in that** one of the peripheral notches (36) receives the handle (80), **in that** the other of the peripheral notches (36) receives the upright (10), and **in that**, preferably, each of the peripheral notches (36) is provided to equally receive the handle (80) or the upright (10).

9. Electrical kitchen appliance according to one of claims 1 to 8, **characterised in that** it comprises an electrical heating device (6) to heat the food contained in the work container (2).

10. Electrical kitchen appliance according to claim 7 and claim 9, **characterised in that** the electrical heating device (6) is carried by the work container (2) and **in that** the base (1) comprises an electrical heating connector (15) to electrically power the electrical heating device (6) when the work container (2) is disposed on the base (1).

11. Electrical kitchen appliance according to one of claims 1 to 10, **characterised in that** the intermediate cover (3) comprises an outer edge (38) having a lower part (39), visible when the upper motorised casing (4) is disposed on the intermediate cover (3).
